(19) Europäisches Patentamt / European Patent Office / Office européen des brevets

(11) **EP 1 391 693 B1**

(12) **EUROPEAN PATENT SPECIFICATION**

(45) Date of publication and mention
of the grant of the patent:
**08.04.2009 Bulletin 2009/15**

(51) Int Cl.:
***G01C 19/72*** *(2006.01)*      ***H01S 3/067*** *(2006.01)*

(21) Application number: **03255149.1**

(22) Date of filing: **20.08.2003**

(54) **Fiber optic sensors with reduced noise**

Faseroptische Sensoren mit reduziertem Rauschen

Capteurs à fibres optiques à bruit reduit

(84) Designated Contracting States:
**DE FR GB IT**

(30) Priority: **20.08.2002 US 405049 P**
**10.07.2003 US 616693**

(43) Date of publication of application:
**25.02.2004 Bulletin 2004/09**

(73) Proprietor: **THE BOARD OF TRUSTEES OF**
**THE LELAND STANFORD JUNIOR UNIVERSITY**
**Palo Alto, CA 94305 (US)**

(72) Inventor: **Digonnet, Michel J.F.**
**Palo Alto, California 94306 (US)**

(74) Representative: **Mallalieu, Catherine Louise et al**
**D Young & Co**
**120 Holborn**
**London EC1N 2DY (GB)**

(56) References cited:
**WO-A-02/14946**           **WO-A-99/64903**
**US-A- 4 773 759**         **US-A- 5 331 404**
**US-A- 5 552 887**         **US-B1- 6 260 388**

**Description**

**Background of the Invention**

**Field of the Invention**

The present invention relates to fiber optic interferometers, and more particularly, relates to fiber optic Sagnac interferometers for sensing, for example, rotation, movement, pressure, or other stimuli.

**Description of the Related Art**

A fiber optic Sagnac interferometer typically comprises a loop of optical fiber to which lightwaves are coupled for propagation around the loop in opposite directions. After traversing the loop, the counterpropagating waves are combined so that they coherently interfere to form an optical output signal. The intensity of this optical output signal varies as a function of the relative phase of the counterpropagating waves when the waves are combined.

Sagnac interferometers have proven particularly useful for rotation sensing. Rotation of the loop about the loop's central axis of symmetry creates a relative phase difference between the counterpropagating waves in accordance with the well-known Sagnac effect, with the amount of phase difference proportional to the loop rotation rate. The optical output signal produced by the interference of the combined counterpropagating waves varies in power as a function of the rotation rate of the loop. Rotation sensing is accomplished by detection of this optical output signal.

Rotation sensing accuracies of Sagnac interferometers are limited by spurious waves caused by Rayleigh backscattering. Rayleigh scattering occurs in present state-of-the-art optical fibers because the small elemental particles that make up the fiber material cause scattering of small amounts of light. As a result of Rayleigh scattering, light is scattered in all directions, Light that is scattered forward and within the acceptance angle of the fiber is the forward-scattered light. Light that is scattered backward and within the acceptance angle of the fiber is the back-scattered light. In a fiber-optic gyroscope (FOG), both the clockwise and the counterclockwise waves along the sensing coil (referred to here as the primary clockwise and primary counterclockwise waves) are scattered by Rayleigh scattering. The primary clockwise wave and the primary counterclockwise wave are both scattered in respective forward and backward directions. This scattered light returns to the detector and adds noise to the primary clockwise wave and to the secondary counterclockwise wave. The scattered light is divided into two types, coherent and incoherent. Coherently scattered light originates from scattering occurring along the section of fiber of length $L_c$ centered around the mid-point of the coil, where $L_c$ is the coherence length of the light source. This scattered light is coherent with the primary wave from which it is derived and interferes coherently with the primary wave. As a result, a sizeable amount of phase noise is produced. Forward coherent scattering is in phase with the primary wave from which it is scattered, so it does not add phase noise. Instead, this forward coherent scattering adds shot noise. The scattered power is so small compared to the primary wave power that this shot noise is negligible. All other portions of the coil produce scattered light that is incoherent with the primary waves. The forward propagating incoherent scattered light adds only shot noise to the respective primary wave from which it originates, and this shot noise is also negligible. The dominant scattered noise is coherent backscattering. This coherent backscattering noise can be large. The coherent backscattering noise has been reduced historically by using a broadband source, which has a very short coherence length $L_c$. With a broadband source, the potion of backscattering wave originates from a very small section of fiber, namely a length $L_c$ of typically a few tens of microns centered on the mid-point of the fiber coil, and it is thus dramatically reduced compared to what it would be with a traditional narrowband laser, which has a coherence length upward of many meters. See for example, Hervé Lefèvre. The Fiber-Optic Gyroscope, Section 4.2, Artech House, Boston, London, 1993, and references cited therein.

Rotation sensing accuracies are also limited by the AC Kerr effect, which cause phase differences between counterpropagating waves in the interferometers. The AC Kerr effect is a well-known nonlinear optical phenomena in which the refractive index of a substance changes when the substance is placed in a varying electric field. In optical fibers, the electric fields of lightwaves propagating in the optical fiber can change the refractive index of the fiber in accordance with the Kerr effect, Since the propagation constant of each of the waves traveling in tile fiber is a function of rafractive index, the Kerr effect manifests itself as intensity dependent perturbations of the propagation constants. If the power circulating in the clockwise direction in the coil is not exactly the same as the power circulating in the counterclockwise direction in the coil, as occurs for example if the coupling ratio of the coupler that produces the two counterpropagating waves is not 50%, the optical Kerr effect will generally cause the waves to propagate with different velocities, resulting in a non-rotationally-induced phase difference between the waves, and thereby creating a spurious signal. See, for example, pages 101-106 of the above-cited Hervé Lefèvre, The Fiber Optic Gyroscope, and references cited therein. The spurious signal is indistinguishable from a rotationally induced signal. Fused silica optical fibers exhibit sufficiently strong Kerr nonlinearity that for the typical level of optical power traveling in a fiber optic gyroscope coil, the Kerr-induced phase difference in the fiber optic rotation sensor may be much larger than the phase difference due to the Sagnac effect at small rotation rates.

Silica in silica-based fibers also can be affected by magnetic fields. In particular, silica exhibits magneto-optic properties. As a result of the magneto-optic Faraday effect in the optical fiber, a longitudinal magnetic field of magnitude $B$ modifies the phase of a circularly polarized wave by an amount proportional to $B$. The change in phase of the circularly polarized wave is also proportional to the Verdet constant $V$ of the fiber material and the length of fiber $L$ over which the field is applied. The sign of the phase shift depends on whether the light is left-hand or right-hand circularly polarized, The sign also depends on the relative direction of the magnetic field and the light propagation. As a result, in the case of a linearly polarized light, this effect manifests itself as a change in the orientation of the polarization by an angle $\theta = VBL$. This effect is non-reciprocal. For example, in a Sagnac interferometer or in a ring interferometer where identical circularly polarized waves counterpropagate, the magneto-optic Faraday effect induces a phase difference equal to $2\theta$ between the counterpropagating waves. If a magnetic field is applied to a fiber coil, however, the clockwise and counterclockwise waves will in general experience a slightly different phase shift. The result is a magnetic-field-induced relative phase shift between the clockwise and counterclockwise propagating waves at the output of the fiber optic loop where the waves interfere. This differential phase shift is proportional to the Verdet constant. This phase difference also depends on the magnitude of the magnetic field and the birefringence of the fiber in the loop. Additionally, the phase shift depends on the orientation (i.e., the direction) of the magnetic field with respect of the fiber optic loop as well as on the polarizations of the clockwise and counterclockwise propagating signals. If the magnetic field is DC, this differential phase shift results in a DC offset in the phase bias of the Sagnac interferometer. If the magnetic field varies over time, this phase bias drifts, which is generally undesirable and thus not preferred.

The earth's magnetic field poses particular difficulty for Sagnac interferometers employed in navigation. For example, as an aircraft having fiber optic gyroscope rotates, the relative spatial orientation of the fiber optic loop changes with respect to the magnetic field of the earth. As a result, the phase bias of the output of the fiber gyroscope drifts. This magnetic field-induced drift can be substantial when the fiber optic loop is sufficiently long, e.g., about 100 meters. To counter the influence of the magnetic field in inertial navigation fiber optic gyroscopes, the fiber optic loop may be shielded from external magnetic fields. Shielding comprising a plurality of layers of $\mu$-metal may be utilized.

US-A-5,331,404 discloses a system for subtracting excess noise from a high sensitivity gyroscope system in which a laser diode array is focused into a Nd-doped active fiber. WO-A-99/64903 discloses a class of optical waveguides, in which waveguiding along one or more core regions is obtained through the photonic Bandgap effect.

**Summary of the Invention**

The inventors of the embodiments disclosed herein have determined that a need exists to reduce or eliminate noise and/or phase drift induced by Rayleigh backscattering, the Kerr effect, and the magneto-optic Faraday effect present in a fiber interferometer, as well as other accuracy-limiting effects. In accordance with aspects of preferred embodiments of the invention disclosed herein, hollow-core photonic-bandgap optical fiber is incorporated in Sagnac interferometers, for example, to improve performance or to provide other design alternatives.

One aspect of the invention comprises a sensor that includes a light source, a directional coupler, a hollow-core photonic-bandgap optical fiber, and an optical detector. The light source has an output that emits a first optical signal. The directional coupler comprises a plurality of ports. A first port is optically coupled to the light source to receive the first optical signal emitted from the light source. The first port is optically couple to a second port and to a third port such that the first optical signal coupled into the first port is split into a second optical signal and a third optical signal that are output by the second port and the third port, respectively. The hollow-core photonic-bandgap optical fiber is optically coupled to the second port and to the third port such that the second optical signal and the third optical signal output from the second port and the third port counterpropagate through the hollow-core photonic-bandgap optical fiber and return to the third port and to the second optical port, respectively. The hollow-core photonic-bandgap optical fiber has a hollow optical core surrounded by a cladding. The cladding of the hollow-core photonic-bandgap optical fiber substantially confines the counterpropagating second and third optical signals within the hollow optical core. The optical detector is located at a position in the optical instrument to receive the counterpropagating second and third optical signals after having traversed the hollow-core photonic-bandgap optical fiber. In certain embodiments the light source comprises a broadband light source outputting light having a spectral wavelength distribution of about 1 nanometer or larger in bandwidth as measured as the full width at half maximum (FWHM). In various other embodiments, the light source comprises a narrowband source outputting light baying a spectral wavelength distribution less than 1 nanometer in bandwidth. Preferably, the spectral wavelength distribution of the light from the narrowband source as measured as the FWHM is less than 0,5 nanometer. More preferably, the spectral. FWHM bandwidth of the light from the narrowband source is less than 0.1 nanometer.

Another aspect of the invention comprises a method of sensing, In accordance with this method, light is produced that has a mean wavelength, $\lambda$. The light is divided into a first portion and a second portion. The first portion propagates clockwise around a hollow waveguide, and the second portion propagates counterclockwise around the hollow waveguide. The first portion and the second portion are substantially confined to propagate through a hollow core in the hollow waveguide by a surrounding cladding having a photonic-bandgap structure for the light of wavelength, λ. The first and second portions of the light are optically interfered after propagating around the hollow waveguide in the respective clockwise and counterclockwise directions, thereby producing an optical interference signal. At least a portion of the hollow waveguide is subject to a perturbation, and variations in the optical interference signal caused by the perturbation are measured. The perturbation may comprise, for example, rotation, movement, pressure, or other stimuli. In certain preferred embodiments, the light is confined to the hollow core that is evacuated or that includes air or other gases. Also, in certain embodiments, the light, is modulated in amplitude at a duty cycle between about 45% and 55%, More preferably, the light is amplitude modulated at a duty cycle of about 50%,

Another aspect of the invention comprises a sensor that includes a light source, a directional coupler, a hollow-core photonic-bandgap fiber, and an optical detector. The light source has an output that emits a first optical signal having a mean wavelength, λ, stable to within at least about $\pm 10^{-6}$ (e.g., stable to one part per million). The directional coupler comprises a plurality of ports. A first port is optically coupled to the light source to receive the first optical signal emitted from the light source. The first port is also optically coupled to a second port and to a third port such that the first optical signal coupled into the first port is split into a second optical signal and a third optical signal that are output by the second port and the third port, respectively. The photonic-bandgap fiber has a hollow core surrounded by a cladding. The hollow-core photonic-bandgap fiber is optically coupled to the second port and to the third port such that the second optical signal and the third optical signal output from the second port and the third port counterpropagate through the hollow-core photonic-bandgap fiber and return to the third port and to the second optical port, respectively. The cladding of the hollow-core photonic-bandgap fiber substantially contains the counterpropagating second and third optical signals within the hollow core. The optical detector is located at a position in the optical instrument to receive the counterpropagating second and third optical signals after having traversed the hollow-core photonic-bandgap fiber.

Another aspect of the invention comprises another method for sensing. In accordance with this method, light is produced having a substantially invariant mean wavelength, λ, which varies no more than about $\pm 10^{-6}$ (e.g., one part per million), A first portion of the light propagates clockwise around an optical path, and a second portion of the light propagates counterclockwise around the optical path. The first and second portions of light are substantially confined to propagation through the optical path by a photonic-bandgap structure for light at the wavelength, λ. The first and second portions of light are optically interfered after both portions have propagated around the optical path in the respcetive clockwise and counterclockwise directions, thereby producing an optical interference signal. At least a portion of the optical path is subject to a perturbation. Variations in the optical interference signal caused by the perturbation are measured. The perturbation may comprise rotation, pressure, movement, or other stimuli. In certain preferred embodiments, the light is confined to an open region that is evacuated or that includes air or other gases. Also, in certain embodiments, the light that is divided into two portions is amplitude modulated at a duty cycle between about 45%. and 55%, and more preferably, at a duty cycle of between about 49% and about 51%, and most preferably at a duty cycle of 50%. In various embodiments, the light that is divided into two portion is frequency modulated at a Frequency between about 1 GHz and about 50 GHz, and more preferably, is modulated at a frequency of about 10 GHz.

## Brief Description of the Drawings

Preferred embodiments of the present invention are described below in connection with the accompanying drawings, in which:

Figure 1 is a schematic drawing of an exemplary Sagnac interferometer depicting the light source, the fiber loop, and the optical detector;

Figure 2A is a partial perspective view of the core and a portion of the surrounding cladding of a hollow-core photonic-bandgap fiber that can be used in the exemplary Sagnac interferometer;

Figure 2B is a cross-sectional view of the hollow-core photonic-bandgap fiber showing more of the features in the cladding arranged in a pattern around the hollow core;

Figure 3 is a schematic drawing of an exemplary Sagnac interferometer wherein the light source comprises a narrowband light source;

Figure 4 is a schematic drawing of an exemplary Sagnac interferometer driven by a narrowband light source with a modulator for modulating the amplitude of the narrowband light source;

Figure 5 is a schematic drawing of an exemplary Sagnac interferometer wherein the light source comprises a broadband light source; and

Figure 6 is a schematic drawing of an exemplary Sagnac interferometer driven by a broadband light source with a modulator for modulating the amplitude of the broadband light source.

**Detailed Description of the Preferred Embodiment**

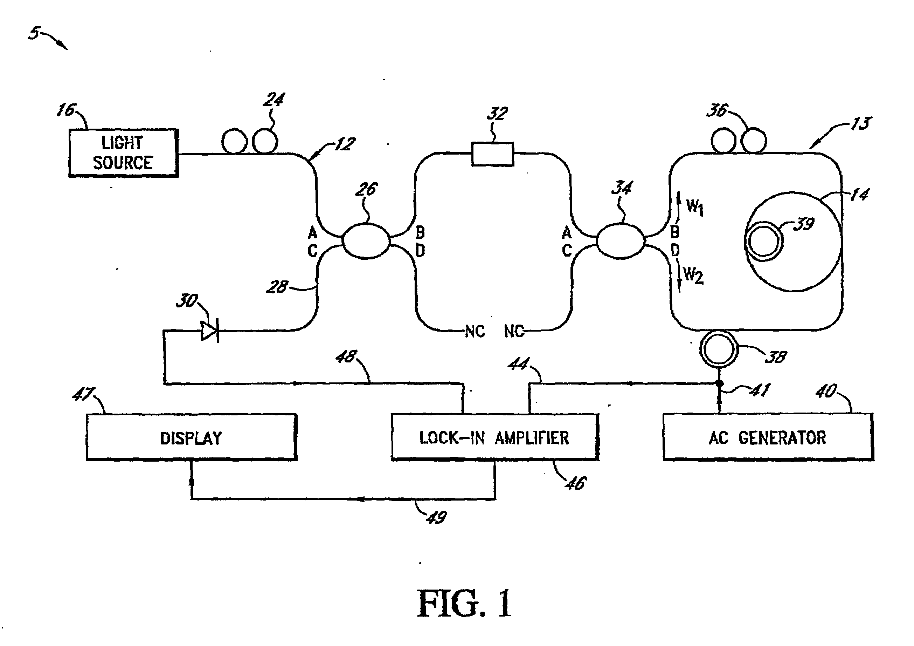

Figure 1 illustrates an exemplary Sagnac interferometer 5 that comprises a fiber optic system 12 that incorporates a photomic-bandgap fiber 13, which, in the preferred embodiments, is a hollow-core photonic-bandgap fiber. A version of a similar fiber optic system that includes a conventional optical fiber rather than a photonic-bandgap fiber is more fully described in U.S. Patent NO. 4,773,759 to Bereb et al., issued on September 27, 1998.

The fiber optic system 12 includes various components positioned at various locations along the fiber optic system 12 for guiding and processing the light. Such components and their use in a Sagnac interferometer 5 are well-known. Alternative embodiments of the system 12 having similar designs or different designs may be realized by those skilled in the art and used in embodiments of the invention.

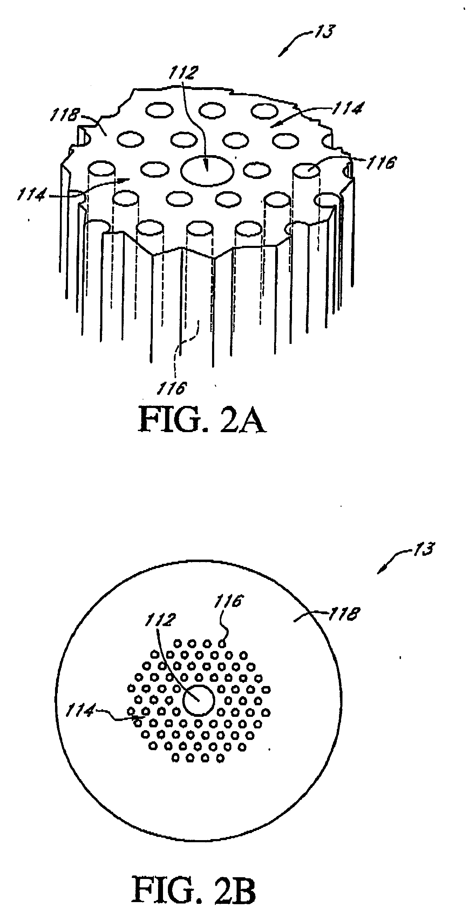

As configured for the Sagnac rotation sensor 5 in Figure 1, the fiber optic system 12 includes a light source 16, a fiber optic loop 14 formed with the hollow-core photonic-bandgap fiber 13 (described below in connection with Figures 2A and 2B), and a photodetector 30. The wavelength of the light output from the light source 16 may be approximately 1.50 to 1.58 microns, in a spectral region where the loss of sillca-based optical fibers is near its minimum. Other wavelengths, however, are possible, and the wavelength of the source emission is not limited to the wavelengths recited herein. For example, if the optical fiber comprises a material other than silica, the wavelength is preferably chosen in the range of wavelengths that minimizes or reduces the loss caused by the optical fibber. Additional detail regarding the light source and various embodiments of the light source are described in further detail below.

The fiber loop 14 in the optic fiber system 12 advantageously comprises a plurality of turns of the photonic-bandgap fiber 13, which is preferably wrapped about a spool or other suitable support (not shown). By way of specific example, the loop 14 may comprise more than a thousand turns of the photonic-bandgap fiber 13 and may comprise a length of optical fiber 13 of about 1000 meters. The optical detector 30 may be one of a variety of photodetectors well known in the art, although detectors yet to be devised may be used as well.

An optional polarization controller 24 may be advantageously included in the interferometer as illustrated in Figure 1. The optional inclusion of the polarization controller 24 depends on the design of the system 12. Exemplary polarization controllers are described, for example, in H.C. Lefévre, Single-Mode Fibre Fractional Wave Devices and Polarisation Controllers, Electronics Letters, Vol. 16, No. 20, September 25, 1980, pages 778-780, and in US Patent No. 4,389,090 to Lefévre, issued on June 21, 1983. The polarization controller 24 permits adjustment of the state of polarization of the applied light. Other types of polarization controllers may be advantageously employed.

The polarization controller 24 is optically connected to a port A of a directional coupler 26. The directional coupler 26 couples light received by port A to a port B and to a port D of the coupler 26. A port C on the coupler 26 is optically coupled to the photodetector 30. Light returning from the Sagnac interferometer is received by port B and is coupled to port A and to port C. In this manner, returning light received by port B is detected by the photodetector 30 optically connected to port C. As shown, port D terminates non-reflectively at the point labeled "NC" (for "not connected"). An exemplary coupler that may be used for the coupler 26 is described in detail in U.S. Patent No. 4,536,058 to Shaw et al., issued on August 20, 1985, and in European Patent Publication No. 0 038 023, published on October 21, 1981. Other types of optical couplers, however, such as integrated optical couplers or couplers comprising bulk optics, may be employed as well. Fused couplers, however, are preferred.

Port B of the directional coupler 26 is coupled to a polarizer 32. After passing through the polarizer 32, the optical path of the system 12 continues to a port A of a second directional coupler 34. The coupler 34 may be of the same type as described above with respect to the first directional coupler 26 but is not so limited, and may comprise integrated-optic or bulk-optic devices. Preferably, the light entering port A of the coupler 34 is divided substantially equally as it is coupled to a port B and a port D. A first portion W1 of the light exits from port B of the coupler 34 and propagates around the loop 14 in a clockwise direction as illustrated in Figure 1. A second portion W2 of the light exits from port D of the coupler 34 and propagates around the loop 14 in a counterclockwise direction as illustrated in Figure 1. As shown, port C of the coupler 34 terminates non-reflectively at a point labeled "NC." It can be seen that the second coupler 34 functions as a beam-splitter to divide the applied light into the two counterpropagating waves W1 and W2, Further, the second coupler 34 also recombines the counterpropagating waves after they have traversed the loop 14. As noted above, other types of beamsplitting devices may be used instead of the fiber optic directional couplers 26,34 depicted in Figure 1.

The coherent backscattering noise in a fiber optic gyroscope using an asymmetrically located phase modulator to provide bias can be substantially reduced or eliminated by selecting the coupling ratio of the coupler 34 to precisely equal to 50%. See, for example, J. M, Mackintosh et al, Analysis and observation of coupling ratio dependence of Rayletgh backscattering noise in a fiber optic gyroscope. Journal of Lightwave Technology, Vol. 7, No. 9, September 1989, pages 1323-1328. This technique of providing a coupling efficiency of 50% can be advantageously used in the Sagnac interferometer 5 of Figure 1 that utilizes the photonic-bandgap fiber 13 in the loop 14. The backscattering noise can be reduced below the level provided by the inherently low Rayleigh backscattering of the photonic-bandgap fiber 13. The Sagnac interferometer 5 may be advantageously used as a fiber optic gyroscope for high-rotation-sensitivity applications that require extremely low overall noise.

the above-described technique of employing a coupler 34 with a coupling efficiency of 50% works well as long as the coupling ratio of coupler 34 remains precisely at 50%. However, as the fiber environment changes (e.g., the coupler temperature fluctuates) or as the coupler 34 ages, the coupling ratio typically varies by small amounts. Under these conditions, the nulling condition may not be continuously satisfied. The use of the photonic-bandgap fiber 13 in the loop 14 instead of a conventional fiber, in conjunction with this coupling technique, relaxes the tolerance for the coupling ratio to be exactly 50%. The photonic-bandgap fiber 13 also reduces the backscattering noise level arising from a given departure of the coupling ratio from its preferred value of 50%.

A polarization controller 36 may advantageously be located between the second directional coupler 34 and the loop 14. The polarization controller 36 may be of a type similar to the controller 24 or it may have a different design. The polarization controller 36 is utilized to adjust the polarization of the waves counterpropagating through the loop 14 so that the optical output signal, formed by superposition of these waves, has a polarisation that will be efficiently passed, with minimal optical power loss, by the polarizer 32. Thus, by utilizing both polarisation controllers, 24, 36, the polarization of the light propagating through the fiber 12 may be adjusted for maximum optical power. Adjusting the polarization controller 36 in this manner also guarantees polarization reciprocity. Use of the combination of the polarizer 32 and the palarization controllers 24, 36 is well known and is disclosed in U.S. Patent No, 4,773,759, cited above. See also, Chapter 3 of Hervé Lefèvre, The Fiber-Optic Gyroscope, cited above.

A first phase modulator 38 is driven by an AC generator 40 to which it is connected by a line 41. The phase modulator 38 is mounted on the optical fiber 13 in the optical path between the fiber loop 14 and the coupler 34. As illustrated in Figure 1, the phase modulator 38 is located asymmetrically in the loop 14. Thus, the modulation of the clockwise propagating wave W1 is not necessarily in phase with the modulation of the counterclockwise propagating Wave W2 because corresponding portions of the clockwise wave W1 and the counterclockwise wave W2 pass through the phase modulator at different times, Indeed, the modulation of the waves must be out of phase so that the phase modulator 38 provides a means to introduce a differential phase shift between the two waves. This differential phase shift biases the phase of the interferometer such that the interferometer exhibits a non-zero first-order sensitivity to a measurand (e.g., a small rotation rate). More particularly, the modulation of the wave W1 is preferably about 180° out of phase with the modulation of the wave W2 so that the first-order sensitivity is maximum or about maximum. Details regarding this modulation are discussed in U.S. Patent No. 4,773,759, cited above,

In various embodiments, the amplitude and frequency of the phase applied by the loop phase modulator 38 can be selected such that the coherent backscattering noise is substantially cancelled. See, for example, J.M. Mackintosh et al., Analysis and observation of coupling ratio dependence of Rayleigh backscattering noise in a fiber optic gyroscope, cited above. This selection technique can be advantageously used in a fiber optic gyroscope utilizing a photonic-bandgap fiber loop. The backscattering noise can thereby be reduced below the level permitted by the inherently low Rayleigh backscattering of the photonic-bandgap fiber, which may be useful in applications requiring extremely low overall noise. Conversely, this technique for selecting amplitude and frequency of the phase applied by the loop phase modulator 38 works well as long as the amplitude and frequency of the applied phase remains precisely equal to their respective optimum value. The use of a photonic" bandgap fiber loop instead of a conventional fiber, in conjunction with this technique, relaxes the tolerance on the stability of the amplitude and frequency of the phase applied by the loop phase modulator 38. This selection technique also reduces the backscattering noise level that may occur when the amplitude, the frequency, or both the amplitude and the frequency of the modulation applied by the loop phase modulator 38 vary from their respective preferred values.

In certain preferred embodiments, a second phase modulator 39 is mounted at the center of the loop 14, The second phase modulator 39 is driven by a signal generator (not shown). The second phase modulator 39 may advantageously be utilized to reduce the effects of backscattered light, as described, for example, in U.S. Patent No. 4,773,759, cited above. The second phase modulator 39 may be similar to the first phase modulator 38 described above, but the second phase modulator preferably operates at a different frequency than the first phase modulator 38, and the second phase modulator 39 is preferably not synchronized with the first phase modulator 38.

In various embodiments of the present invention, the photonic-bandgap fiber 13 within the loop 14 and the phase modulators 38 and 39 advantageously comprise polarization preserving fiber. In such cases, the polarizer 32 may or may not be excluded, depending on the required accuracy of the sensor. In one preferred embodiment, the light source 16 comprises a laser diode that outputs linearly polarized light, and the polarization of this light is matched to an eigenmode of the polarization maintaining fiber. In this manner, the polarisation of the light output from the laser diode 10 may be maintained in the fiber optic system 12.

The output signal from the AC generator 40 is shown in Figure 1 as being supplied on a line 44 to a lock-in amplifier 46, which also is connected via a line 48 to receive the electrical output of the photodetector 30. The signal on line 44 to the amplifier 46 provides a reference signal to enable the lock-in amplifier 46 to synchronously detect the detector output signal on line 48 at the modulation frequency of the phase modulator 38. Thus, the lock-in amplifier 46 effectively provides a band-pass fitter at the fundamental frequency of the phase modulator 38 that blocks all other harmonics of this frequency. The power in this fundamental component of the detected output signal is proportional, over an operating range, to the rotation rate of the loop 14. The lock-in amplifier 46 outputs a signal, which is proportional to the power in this fundamental component, and thus provides a direct indication of the rotation rate, which may be visually displayed on a display panel 47 by supplying the lock-in amplifier output signal to the display panel 47 on a line 49. Note that in other embodiments, the lock-in amplifier may be operated in different modes or may be excluded altogether, and the signal can be detected by alternative methods. See, for example, B.Y. Kim, Signal Processing Techniques, Optical Fiber Rotation Sensing. William Burns, Editor, Academic Press, Inc., 1994, Chapter 3, pages 81-114.

As is well known, conventional optical fibers comprise a high index central core surrounded by a lower index cladding. Becauses of the index mismatch between the core and cladding, light propagating within a range of angles along the optical fiber core is totally internally reflected at the core-cladding boundary and thus is guided by the fiber core. Typically, although not always, the fiber is deigned such that a substantial portion of the light remains within the core. As described below, the photonic-bandgap fiber 13 in the optical loop 14 also acts as a waveguide; however, the waveguide is formed in a different manner, and its mode properties are such that various effects that limit the performance of a fiber interferometer that uses conventional fiber (e.g., a Sagnac interferometer) can be reduced by using the photonic-bandgap fiber 13 in portions of the fiber optic system 12, particularly in the optical loop 14.

An exemplary hollow-core photonic-bandgap fiber 13 is shown in Figures 2A and 2B. Hollow-core photonic-bandgap fibers (photonic crystal fibers) are well-known. See, for example, U.S. Patent No. 5,802,236 to DiGiovanni et al., issued on September 1, 1998, for *Article Comprising a Microstructure Optical Fiber, and Method of Making such Fiber*, U.S. Patent No. 6,243,522 to Allen et al., issued on June 5, 2001, for *Photonic Crystal Fibers*; U.S. Patent No. 6,260,388 to Borrelli et al., issued on July 17, 2001, for *Method of Fabricating Photonic Glass Structures by Extruding, Sintering and Drawing*; U.S. Patent No. 6,334,017 to West et al., issued on December 25, 2001, for *Ring Photonic Crystal Fibers*; and U.S. Patent No. 6,334,019 to Birks et al. issued on December 25, 2001, for *Single Mode Optical Fiber*.

As illustrated in Figures 2A and 2B, the hollow-core photonic-bandgap fiber 13 includes a central core 112, A cladding 114 surrounds the core 112. Unlike the central core of conventional fiber, the central core 112 of the fiber 13 is preferably hollow. The open region within the hollow core 112 may be evacuated or it may be filled with air or other gases. The cladding 114 includes a plurality of features 116 arranged in a periodic pattern so as to create a photonic-bandgap structure that confines light to propagation within the hollow core 112. For example, in the exemplary fiber 13 of Figures 2A and 2B, the features 116 are arranged in a plurality of concentric triangles around the hollow core 112. The two innermost layers of holes in the exemplary pattern are shown in the partial perspective view of Figure 2A. A complete pattern of four concentric layers of holes is illustrated in the cross-sectional view of Figure 2B. Although the illustrated hole pattern is triangular, other arrangements or patterns may advantageously be used. In addition, the diameter of the core 112 and the size, shape, and spacing of the features 116 may vary.

As illustrated by phantom lines in Figure 2A, the features 116 may advantageously comprise a plurality of hollow tubes 116 formed within a matrix material 118. The hollow tubes 116 are mutually parallel and extend along the length of the photonic-bandgap fiber 13 such that the tubes 116 maintain the triangular grid pattern shown in Figure 2B. The matrix material 118 that surrounds each of the tubes 116 comprises, for example, silica, silica-based materials or various other materials well known in the art as well light-guiding materials yet to be developed or applied to photonic-bandgap technology.

The features (e.g., holes) 116 are specifically arranged to create a photonic-bandgap. In particular, the distance separating the features 116, the symmetry of the grid, and the size of the features 116 are selected to create a photonic bandgap where light within a range of frequencies will not propagate within the cladding 114 if the cladding was infinite (i.e., in the absence of the core 112). The introduction of the core 112, also referred to herein as a "defect," breaks the symmetry of this original cladding structure and introduces new sets of modes in the fiber 13. These modes in the fiber 13 have their energy guided by the core and are likewise referred to as core modes, The array of features (e.g., holes) 116 is preferably specifically designed so as to produce a strong concentration of optical energy within the hollow core 112. Light propagates substantially entirely within the hollow core 112 of the fiber 13 with very low loss. Exemplary low loss air core photonic band-gap fiber is described in N. Venkataraman et al., Low Loss (13 dB/km) Air Core Photonic Band-Gap Fibre, Proceedings of the European Conference on Optical Communication. ECOC 2002, Post-deadline Paper No. PD1,1, September 2002.

In various preferred embodiments, the fiber parameters are further selected so that the fiber is "single mode" (i.e., such that the cote 112 supports only the fundamental core mode). This single mode includes in fact the two eigenpolarizations of the fundamental mode. The fiber 13 therefore supports two modes corresponding to both eigenpolarizations. In certain preferred embodiments, the fiber parameters are further selected so that the fiber is a single-polarization fiber having a core that supports and propagates only one of the two eigenpolarizations of the fundamental core mode.

It should be understood that other types of photonic-bandgap fibers or photonic-bandgap devices, both known and yet to be devised, may be employed in the Sagnac rotation sensors as well as interferometers employed for other purposes. For example, one other type of photonic-bandgap fiber that may be advantageously used is a Bragg fiber. A Bragg fiber includes a cladding surrounding a core, wherein the core-cladding boundary comprises a plurality of thin layers of materials with alternating high and low refractive indices. In various preferred embodiments, the cladding interface (i.e., the core-cladding boundary) comprises a plurality of concentric annular layers of material surrounding the core. The thin layers act as a Bragg reflector and contains the light in the low-index (typically air) core. Bragg fibers are described, for example, in P. Yeh et al., Theory of Bragg Fiber, Journal of Optical Society of America, Vol. 68, 1978, pages 1197-1201.

The use of hollow-core photonic-bandgap fiber instead of conventional optical fiber in a Sagnac interferometer may substantially reduce noise and error introduced by Rayleigh backscattering, the Kerr effect, and the presence of magnetic fields. In hollow-core photonic-bandgap fiber, the optical mode power is mostly confined to the hollow core, which may comprise, for example, air, another gas, or vacuum. Rayleigh backscattering as well as Kerr nonlinearity and the Verdet constant are substantially less in air, other gases, and vacuum than in silica, silica-based materials, and other solid optical materials, The reduction of these effects coincides with the increased fraction of the optical mode power contained in the hollow core of the photonic-bandgap fiber.

The Kerr effect and the magneto-optic effect tend to induce a long-term drift in the bias point of the Sagnac interferometer, which results in a drift of the scale factor correlating the phase shift with the rotation rate applied to the fiber optic gyroscope. In contrast, Rayleigh backscattering tends to introduce mostly short-term noise in the measured phase, thereby raising the minimum detectable rotation rate. Each of these effects interferes with the extraction of the desired information from the detected optical signal. The incorporation of the hollow-core photonic-bandgap fiber 13 into the interferometer 5 preferably diminishes these effects.

A parameter, $\eta$, is defined herein as the fractional amount of fundamental mode power in the solid portions of the photonic-bandgap fiber. The phase drift caused by the Kerr nonlinearity and the magneto-optic effect, as well as the noise introduced by Rayleigh backscattering, are each proportional to the parameter, $\eta$, provided that $\eta$ is not too small. An analysis of the effect of $\eta$ is set forth below for the Kerr effect, Similar analyses can be performed for Rayleigh backscattering and the magneto-optic Faraday effects,

Since some of the mode energy resides in the holes including the core of the photonic-bandgap fiber and some of mode energy resides in the solid portions of the fiber (typically a silica-based glass), the Kerr effect in a photonics-bandgap fiber (PBP) includes two contributions. One contribution is from the solid portions of the fiber, and one contribution is from the holes. The residual Kerr constant of a photonic-bandgap fiber, $n_{2,PBF}$, can be expressed as the sum of these two contributions according to the following equation:

$$n_{2,PBF} = n_{2,solid}\,\eta + n_{2,holes}\,(1-\eta) \qquad (1)$$

where $n_{2,solid}$ is the Kerr constant for the solid portion of the fiber, which may comprise for example silica, and where $n_{2,holes}$ is the Kerr constant for the holes, which may be, for example, evacuated, gas-filled, or air-filled. If the holes are evacuated, the Kerr nonlinearity is zero because the Kerr constant of vacuum is zero. With the Kerr constant equal to zero, the second contribution corresponding to the term $n_{2,holes}(1-\eta)$ in Equation (1) is absent. In this case, the Kerr nonlinearity is proportional to the parameter, $\eta$, as indicated by the remaining term $n_{2,solid}\eta$. However, if the holes are filled with air, which has small but finite Kerr constant, both terms ($n_{2,solid}\,\eta + n_{2,holes}\,(1-\eta)$) are present. Equation (1) above accounts for this more general case,

For standard silica fiber, the percentage of the optical mode contained in the cladding is generally in the range of 10% to 20%. In the hollow-core photonic-bandgap fiber 13, the percentage of the optical mode in the cladding 114 is estimated to be about 1% or substantially less. Accordingly, in the photonic-bandgap fiber 13, the effective nonlinearity due to the solid portions of the fiber may be decreased by a factor of approximately 20. According to this estimate, by using the hollow-core photonic-bandgap fiber 13, the Kerr effect can be reduced by at least one order of magnitude, and can be reduced much more with suitable design. Indeed, measurements indicate that the photonic-bandgap fibers can be designed with a parameter $\eta$ small enough that the Kerr constant of the solid portion of the fiber, $n_{2,solids}$ is negligible compared to the hole contribution, $n_{2,holes}$ Even in the case where $n_{2,solid}$ is much larger than $n_{2,holes}$, the fiber can be designed in such a way that $\eta$ is sufficiently small that $n_{2,holes}(1-\eta)$ is larger than $n_{2,solid}\eta$. See, for example, D.G. Ouzounov et al., Dispersion and nonlinear propagation in air-core photonic-bandgap fibers, Proceedings of the Conf. on Lasers and Electro-optics, Paper CThV5, June 2003.

A relationship similar to Equation (1) applies to Rayleigh backscattering and magneto-optic Faraday effect. Accordingly, Equation (1) can be Written in the following more general form to encompass Rayleigh backscattering and the magneto-optic Faraday effect as well as the Kerr effect:

$$F_{PBF} = F_{solid}\eta + F_{holes}(1-\eta)$$ (2)

In Equation (2), F corresponds to any of the respective coefficients, the Kerr. constant $n_2$, the Verdet constant $V$, or the Rayleigh scattering coefficient $\alpha_2$. The terms $F_{PBF}, F_{solids}$ and $F_{holes}$ represent the appropriate constant for the photonic-bandgap fiber, for the solid material, and for the holes, respectively. For example, when the Kerr constant $n_2$ is substituted for F, Equation (2) becomes Equation (1). When the Verdet constant V is substituted for F, Equation (2) describes the effective Verdet constant of a photonic-bandgap fiber.

The first term of Equation (2), $F_{solid}\eta$, arises from the contribution of the solid portion of the fiber, and the second term $F_{holes}(1-\eta)$ arises from the contribution of the holes, In a conventional fiber, only the first term is present. In a photonic-bandgap fiber, both the term for the solid portion, $F_{solid}\eta$, and the term for the hollow portion, $F_{holes}(1-\eta)$, generally contribute. The contributions of these terms depend on the relative percentage of mode power in the solid, which is quantified by the parameter $\eta$. As discussed above, if $\eta$ is made sufficiently small through appropriate fiber design, for example, the first term $F_{solid}\eta$ can be reduced to a negligible value and the second term $F_{holes}(1-\eta)$ dominates, This is beneficial because $F_{holes}$ is much smaller than $F_{solid}$, which means that the second term is small and thus F is small. This second term $F_{holes}(1-\eta)$ can be further reduced by replacing the air in the holes with a gas having a reduced Kerr constant $n_2$, a reduced Verdet constant $V_s$ a reduced Rayleigh scattering coefficient $\alpha_s$, or reduced values of all or some of these coefficients. This second term $F_{holes}(1-\eta)$ can be reduced to zero if the holes in the fiber are evacuated.

As discussed above, the solid contributions to the Rayleigh backscattering, the Kerr-induced phase error, and the magnetic-field-induced phase ship on the optical signal can be decreased by reducing the parameter, $\eta$. Accordingly, the photonic-bandgap fiber is designed so as to reduce this parameter, $\eta$, in order to diminish the solid contributions to of Rayleigh backscattering, Kerr nonlinearity, and the magnetic field effects proportionally. For example, in particular designs of the hollow-core photonic-bandgap fiber, the value of $\eta$ may be about 0.003 or lower, although this range should not be construed as limiting.

As described above, Rayleigh backscattering in an optical fiber creates a reflected wave that propagates through the fiber in the direction opposite the original direction of propagation of the primary wave that produces the backscattering. Since such backscatteted . light is coherent with the light comprising the counterpropagating waves W1, W2, the back-scattered light interferes with the primary waves and thereby adds intensity noise to the signal measured by the detector 30.

Backscattering is reduced by employing the hollow-core photonic-bandgap fiber 13 in the loop 14. As described above, the mode energy of the optical mode supported by the hollow-core photonic-bandgap fiber 13 is substantially confined to the hollow core 112. In comparison to conventional solid-core optical fibers, less scattering results for light propagating through vacuum, air, or gas in the hollow core 112.

By increasing the relative amount of mode energy in the holes (including the hollow core) and reducing the amount of mode energy in the solid portion of the fiber, backscattering is reduced. Accordingly, by employing the photonic-bandgap fiber 13 in the loop 14 of the fiber optic system 12, backscattering can be substantially reduced,

A hollow-core fiber also reduces the effect of a magnetic field on the performance of the interferometer. As discussed above, the Verdet constant is smaller in air, gases, and vacuum than in solid optical materials such as silica-based glasses. Since a large portion of the light in a hollow-core photonic-bandgap fiber propagates in the hollow core, the magneto-optic-induced phase error is reduced. Thus, less magnetic-field shielding is needed.

Laser light comprising a number of oscillatory modes, or frequencies, e.g., light from a superfluorescent fiber source (SFS), may also be used in the rotation sensing device described herein to provide a lower rotation rate error than is possible with light from a single-frequency source under similar conditions. Multimode lasers may also be employed in some embodiments. In particular, it has been shown that the Kerr-induced rotation rate error is inversely proportional to the number of oscillating modes in the laser because multiple frequency components cause the self-phase modulation and cross-phase modulation terms in the Kerr effect to at least partially average out, thereby reducing the net Kerr-induced phase error. A mathematical analysis of this phenomena and examples of reductions in the Ketr-induced phase error are disclosed in U.S. Patent No. 4,773,759, cited above,

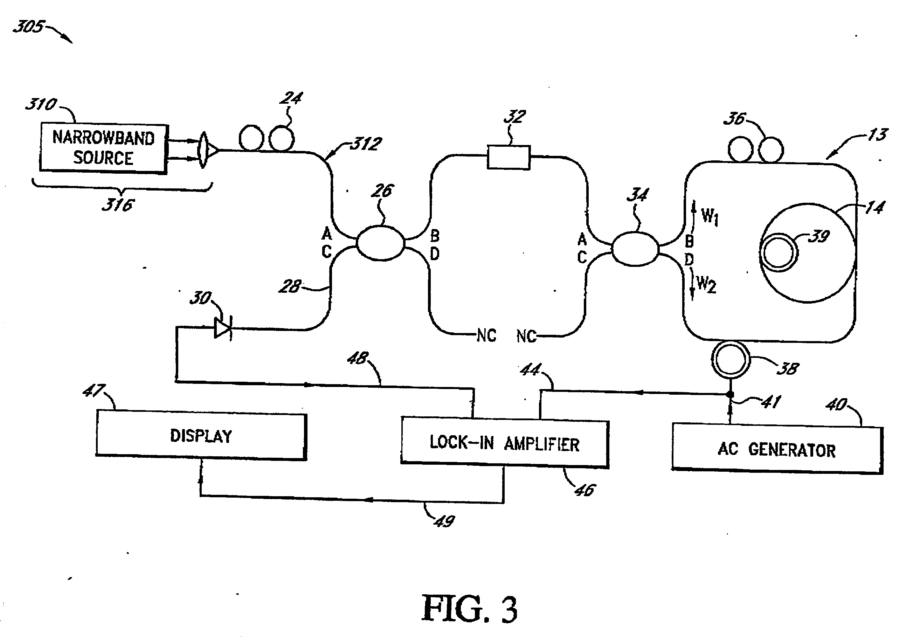

Although a superfluorescent light source may be used with the fiber optic system 12 of Figure 1, the system 12 preferably incorporates a light source 16 that outputs light having a substantially axed single frequency. Because the scale factor of a fiber optic gyroscope depends on the source mean wavelength, random variations in this wavelength will lead to random variations in the wavelength factor, which introduces undesirable error in the measured rotation rate. Light sources having a substantially stable output wavelength have been developed for telecommunications applications, and these sources are thus available for use in fiber optic rotation sensing systems. These light sources, however, are typically narrowband sources. Accordingly, utilization of these narrowband stable-frequency light sources with a conventional optical fiber would be inconsistent with the above-described use of broadband multimode laser sources to compensate for the Kerr effect. However, Figure 3 illustrates m embodiment of an interferometer 305 in accordance with an aspect of the present invention that can achieve a substantially stable wavelength while reducing the Kerr contributions to the drift in the interferometer bias. The interferometer 305 comprises an optical fiber system 312 that includes a stable-frequency narrowband light source 316 in combination with the hollow-core photonic-bandgap caber 13. By introducing the hollow-core photonic-bandgap fiber 13 into the fiber optic system 312, the conventionally available narrowband light source 316 having a substantially stable-frequency output can be advantageously used. The Sagnac interferometer 305 in Figure 3 is similar to the Sagnac interferometer 5 of Figure 1, and like elements from Figure 1 are identified with like numbers in Figure 3. As described above with respect to the fiber optic system 12 of Figure 1, the fiber optic system 312 of Figure also includes an optical loop 14 that comprises a length of the hollow-core photonic bandgap fiber 13. The narrowband light source 316 advantageously comprises a light-emitting device 310 such as a laser or other coherent light source. Examples of a light-emitting laser 310 include a laser diode, a fiber laser, or a solid-state laser. Other lasers or other types of narrowband light sources may also be advantageously employed in other embodiments. In some embodiments, the narrowband light source 316 outputs light having a FWHM spectral bandwidth, for example, of about 1 GHz or less, and, more preferably, has a FWHM spectral bandwidth of about 100 MHz or less, and most preferably about 10 MHz or less. light sources having bandwidths outside the preferred ranges may also be included in other embodiments.

As discussed above, the light source 316 preferably operates at a stable wavelength. The output wavelength may, for example, not deviate more than about $\pm 10^{-6}$ (i.e., $\pm 1$ part per million (ppm)) in some embodiments. Preferably, the wavelength instability is about $\pm 10^{-7}$ (i.e., $\pm 0,1$ ppm) or lower in certain embodiments, Narrowband light sources that offer such wavelength, stability such as the lasers produced widely for telecommunication applications, are currently available. Accordingly, as a result of the use of a stable-wavelength light source, the stability of the Sagnac interferometer scale factor is enhanced.

A narrowband light source will also result in a longer coherence length in comparison with a broadband light source and will thus increase the contribution of noise produced by coherent backscattering. For example, if the clockwise propagating light signal W1 encounters a defect in the loop 14, the defect may cause light from the light signal **W1** to backscatter in the counterclockwise direction. The backscattered light will combine and interfere with light in the counterclockwise propagating primary light signal W2. Interference will occur between the backscattered W1 light and the counterclockwise primary light W2 if the optical path difference traveled by these two light signals is approximately within one coherence length of the light, For scatter points farther away from the center of the loop 14, this optical path difference will be largest. A larger coherence length therefore causes scatter points farther and farther away from the center of the loop 14 to contribute to coherent noise in the optical signal, which increases the noise level.

A coherence length which is preferably less than the length of the optical path from port B of the coupler 34 to port D would reduce the magnitude of the coherent backscatter noise. However, a narrowband light source, such as the narrowband source 316, has a considerably longer coherence length than a broadband light source and thus will cause more coherent backscatter if a conventional optical fiber is used instead of the photonic-bandgap fiber 13 in the embodiment of Figure 3 However, by combining the use of the stable-frequency narrowband light source 316 with the hollow-core photonic-bandgap fiber 13 as shown in Figure 3, the coherent backscattering can be decreased because the hollow-core photonic-bandgap fiber 13 reduces scattering as described above. The bandwidth of the narrowband source 316 is preferably selected such that the optical power circulating in either direction through the optical loop 14 is smaller than the threshold power for stimulated Brillouin scattering calculated for the specific fiber used in the coil.

By employing the narrowband stable wavelength optical source 316 in conjunction with the hollow-core photonic-bandgap fiber 13 in accordance with Figure 3, scale factor instability resulting from the fluctuating source mean wavelength can be decreased while reducing the contributions of the Kerr nonlinearities as well as coherent backscattering.

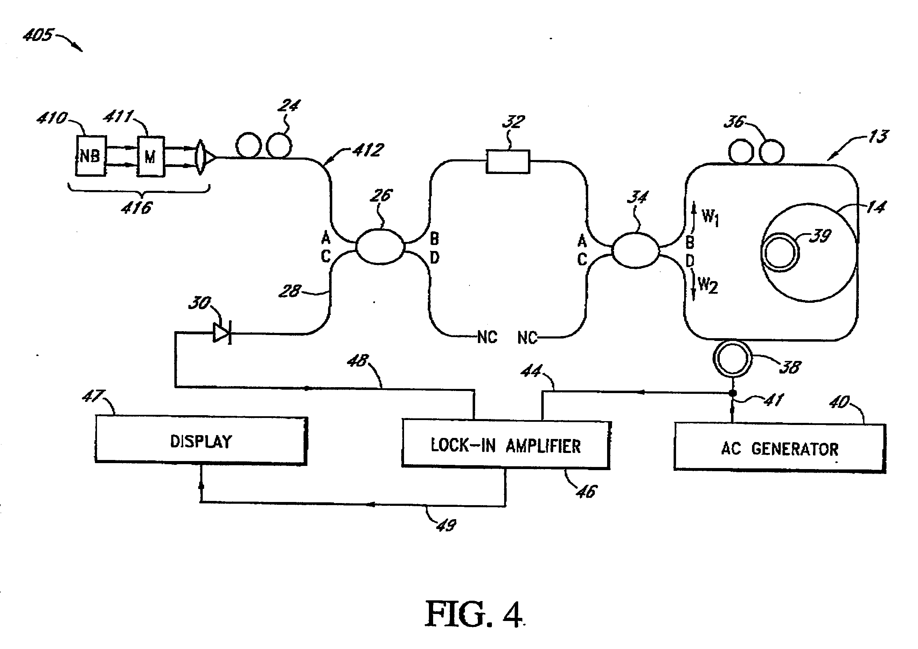

If the Kerr effect is still too large and thus introduces a detrimental phase drift that degrades the performance of the fiber optic system 312 of Figure 3, other methods can also be employed to reduce the Kerr effect. One such method is implemented in a Sagnac interferometer 405 illustrated in Figure 4. The Sagnac interferometer 405 includes a fiber optic system 412 and a narrowband source 416. The narrowband source 416 of Figure 4 comprises a light-emitting device 410 in combination with an amplitude modulator 411. The light-emitting device 410 may advantageously be similar to or the same as the light-emitting device 310 of Figure 3. The optical signal from the light-emitting device 310 is modulated by the amplitude modulator 411. Preferably, the amplitude modulator 411 produces a square-wave modulation, and, more preferably, the resulting light output from the narrowband source 416 has a modulation duty cycle of about 50%. The modulation is preferably maintained at a sufficiently stable duty cycle. As discussed, for example, in U.S. Patent No. 4,773,759, cited above, and in R.A. Bergh et al, Compensation of the Optical Kerr Effect in Fiber-Optic Gyroscopes, Optics Letters. Vol. 7, 1992, pages 282-284, such square-wave modulation effectively cancels the Kerr effect in a fiber-optic gyroscope. Alternatively, as discussed, for example, in Hervé Lefèvre, The Fiber-Optic Gyroscope, cited above, other modulations that produce a modulated signal with a mean power equal to the standard deviation of the power can also be used to cancel the Kerr effect. For example, the intensity of the light output from the light source 416 may be modulated by modulating the electrical current supplied to the light-emitting device 410.

In certain embodiments, other techniques can be employed in conjunction with the use of a narrowband light source 416 of Figure 4, for example, to reduce noise and bias drift. For example, frequency components can be added to the narrowband light source 416 by frequency or phase modulation to effectively increase the bandwidth to an extent. If, for example, the narrowband light source 416 has a linewidth of about 100 MHz, a 10-GHz frequency modulation will increase the laser linewidth approximately 100 times, to about 10 GHz. Although a 10-GHz modulation is described in this example, the frequency modulation does not need to be limited to 10 GHz, and maybe higher or lower in different embodiments. The phase noise due to Rayleigh backscattering is inversely proportional to the square root of the laser linewidth Accordingly, an increase in linewidth of approximately 100 fold results in a 10-fold reduction in the short-term noise induced by Rayleigh backscattering. Refinements in the design of the photonic-bandgap fiber 13 to further reduce the parameter $\eta$ can also be used to reduce the noise due to Rayleigh scattering to acceptable levels.

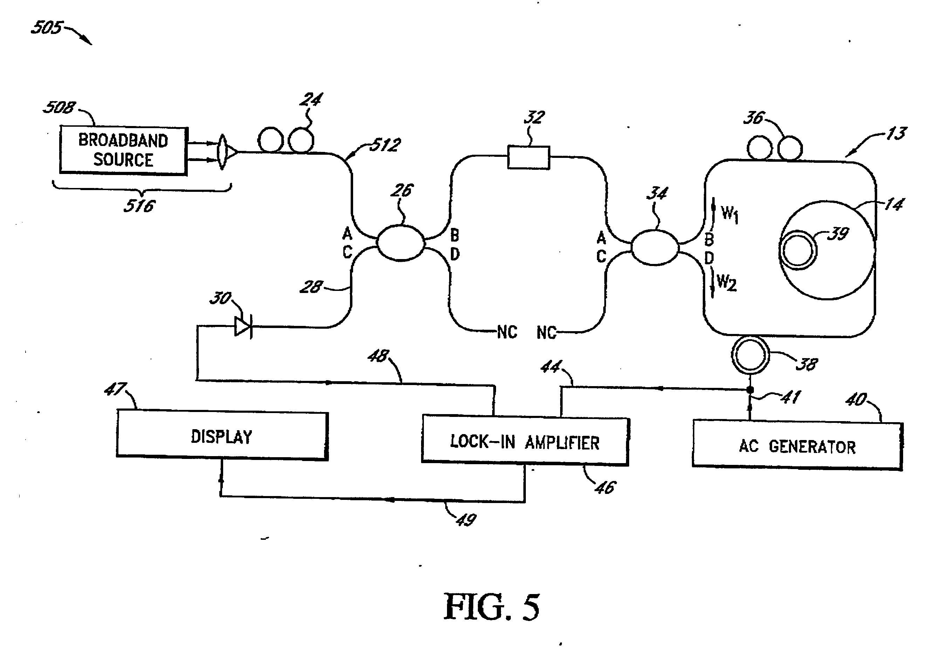

Figure 5 illustrates an embodiment of a Sagnac interferometer 505 that incorporates a broadband source 516 that may be advantageously used in conjunction with the hollow-core photonic-bandgap fiber 13 in an optical fiber system 512 in order to mitigate Kerr non-linearity, Rayleigh backscattering and magnetic-field effects. Accordingly, the bias drift as well as the short-term noise can be reduced in comparison to systems utilizing narrowband light sources,

The broadband light source 516 advantageously comprises a broadband light-emitting device 508 such as, for example, a broadband fiber laser or a fluorescent light source. Fluorescent light sources include light-emitting diodes (LEDs), which are semiconductor-based sources, and superfluorescent fiber sources (SFS), which typically utilize a rare-earth-doped fiber as the gain medium. An example of a broadband fiber laser can be found in K. Liu et al., Broadband Diode-Pumped Fiber Laser, Electron. Letters. Vol. 24, No, 14, July 1988, pages 838-840. Erbium-doped supesrfluorescent fiber sources can be suitably employed as the broadband light-emitting device 508. Several configurations of superfluorescent fiber sources are described, for example, in Rare Earth Doped Fiber Lasers and Amplifiers, Second Edition, M.J.F. Digonnet, Editor, Marcel Dekker, Inc., New York, 2001, Chapter 6, and references cited therein, This same reference and other references well-known in the art disclose various techniques that have been developed to produce Er-doped superfluorescent fiber sources with highly stable mean wavelengths. Such techniques are advantageously used in various embodiments of the invention to stabilize the scale factor of the Sagnac Interferometer 505. Other broadband light sources 516 may also be used.

In certain embodiments, the broadband light source 516 outputs light having a FWHM spectral bandwidth of, for example, at least about 1 nanometer. In other embodiments, the broadband light source 516 outputs light having a FWHM spectral bandwidth of, for example, at least about 10 nanometers. In particular embodiments, the spectral bandwidth may be more than 30 nanometers. Light sources having bandwidths outside the described ranges maybe included in other embodiments,

in certain embodiments, the bandwidth of the broadband light source can be reduced to relax design constraints in producing the broadband source. Use of the hollow-core photonic-bandgap fiber 13 in the Sagnac interferometer 505 may at least partially compensate for the increased error resulting from reducing the number of spectral components that would otherwise be needed to help average out the backscatter noise and other detrimental effects. The Sagnac interferometer 505 has less noise as a result of Kerr compensation and reduced coherent backscattering. In certain preferred embodiments, the fiber optic system 512 operates with enhanced wavelength stability. The system 512 also possesses greater immunity to the effect of magnetic fields and may therefore employ less magnetic shielding.

The fiber optic system 512 of Figure 5 advantageously counteracts phase error and phase drift, and it provides a high level of noise reduction. This enhanced accuracy may exceed requirements for current navigational and non-navigational applications.

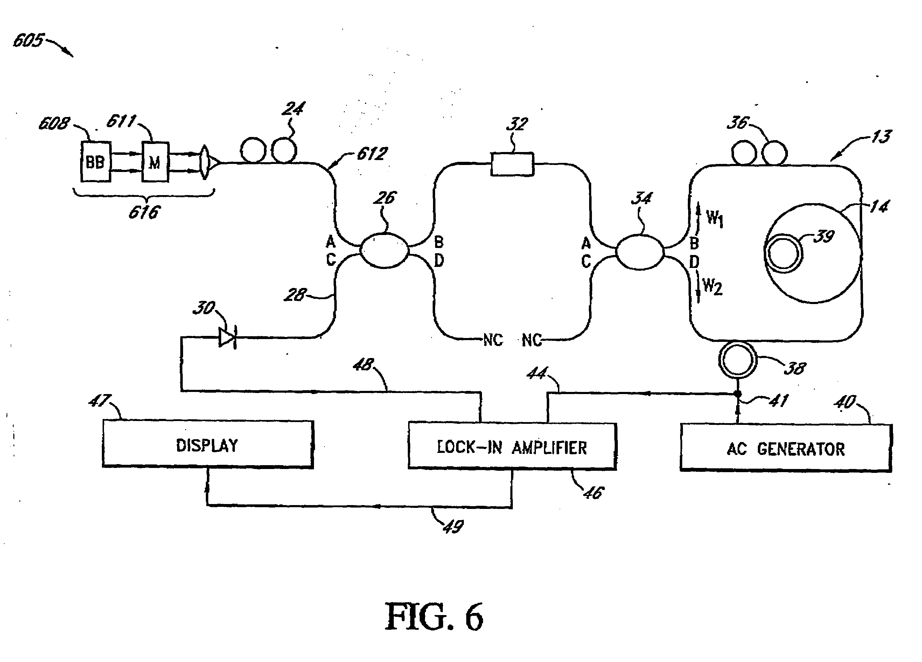

Figure 6 illustrates an embodiment in accordance with a further aspect of the present invention. In particular, in Figure 6, a Sagnac interferometer 605 comprises an optical fiber system 612 in combination with a broadband light source 616. The broadband source 616 advantageously comprises a broadband light-emitting device 608 in combination with a modulator 611. Preferably, the modulator 611 modulates the power of the broadband light at a duty cycle of approximately 50%. The modulated broadband light from the broadband source 616 contributes to the reduction or elimination of the Kerr effect, as discussed above.

Other advantages to employing a hollow-core photonic-bandgap fiber are possible. For example, reduced sensitivity to radiation hardening may be a benefit. Silica fiber will darken when exposed to high-energy radiation, such as natural background radiation from space or the electromagnetic pulse from a nuclear explosion. Consequently, the signal will be attenuated. In a hollow-core photonic-bandgap fiber, a smaller fraction of the mode energy propagates in silica and therefore attenuation resulting from exposure to high-energy radiation is reduced.

The Sagnac interferometers 5, 305, 405, 505 and 605 illustraxed in Figures 1, 3, 4, 5 and 6 have been wed herein to describe the implementation and benefits of the hollow-core bandgap optical fiber 13 of Figures 2A and 2B to improve the performances of the interferometers. It should be understood that the disclosed implementations are exemplary only. For example, the interferometers 5, 305, 405, 505 and 605 need not comprise a fiber optic gyroscope or other rotation-sensing device. The structures and techniques disclosed herein are applicable to other types of systems using fiber Sagnac interferometers as well.

Although gyroscopes for use in inertial navigation, have been discussed above, hollow-core photonic-bandgap fiber can be employed in other systems, sub-systems, and sensors using a Sagnac loop. For example, hollow-core photonic-bandgap fiber may be advantageously used in fiber Sagnac perimeter sensors that detect motion and intrusion for property protection and in acoustic sensor arrays sensitive to pressure variations. Perimeter sensors are described, for example, in M. Szustakowski et al., Recent development of fiber optic sensors for perimeter security, Proceedings of the 35th Annual 2001 International Carnahan Conference on Security Technology. 16-19 October 2001, London, UK, pages 142-148, and references cited therein. Sagnac fiber sensor arrays are described in G.S. Kino et al., A Polarization-based Folded Sagnac Fiber-optic Array for Acoustic Waves, SPIE Proceedings on Fiber Optic Sensor Technology and Applications 2001, Vol, 4578 (SPIE, Washington, 2002), pages 336-345, and references cited therein. Various preferred applications described herein, however, relate to fiber optic gyroscopes, which may be useful for navigation, to provide a range of accuracies from low accuracy such as for missile guidance to high accuracy such as aircraft navigation. Nevertheless, other uses, both those well-known as well as those yet to be devised, may also benefit from the advantages of the various embodiments of the present invention. The specific applications and uses are not limited to those recited herein.

Also, other designs and configurations, those both well known in the art and those yet to be devised, may be employed in connection with the innovative structures and methods described herein. The interferometers 5,305,405,505 and 605 may advantageously include the same or different components as described above, for example, in connection with Figures 1,3,4,5 and 6, A few examples of such components include polarizers, polarization. controllers, splitters, couplers, phase modulators, and lock-in amplifiers. Other devices and structures may be included as well.

In addition, the different portions of the optical fiber systems 12, 312, 412, 512 and 612 may comprise other types of waveguide structures such as integrated optical structures comprising channel or planar waveguides. These integrated optical structures may, for example, include integrated-optic devices optically connected via segments of optical fiber. Portions of the optical fiber systems 12, 312, 412, 512 and 612 may also include unguided pathways through free space. For example, the optical fiber systems 12, 312,412, 512 and 612 may include other types of optical devices such as bulk-optic devices having pathways in free space where the light is not guided as in a waveguide as well as integrated optical structures. However, much of the optical fiber system preferably includes optical fiber which provides a (preferably substantially continuous) optical pathway for light to travel between the source and the detector. For example, photonic-bandgap fiber may advantageously be used in portions of the optical fiber systems 12,312, 412, 512 and 612 in addition to the fiber 13 in the loop 14. In certain embodiments, the entire optical fiber system from the source to and through the loop and back to the detector may comprise photonic-bandgap fiber. Some or all of the devices described herein may also be fabricated in hollow-core photonic-bandgap fibers, following procedures yet to be devised. Alternatively, photonic-bandgap waveguides and photonic-bandgap waveguide devices other than photonic-bandgap fiber may be employed for certain devices.

Several techniques have been described above for lowering the level of short-term noise and bias drift arising from coherent backscattering, the Kerr effect, and magneto-optic Faraday elect. It is to be understood that these techniques can be used alone or in combination with each other in various embodiments of the invention. Other techniques not described herein may also be employed in operating the interferometers and to improve performance. Many of these techniques are well known in the art; however; those yet to be developed are considered possible as well. Also, reliance on any particular scientific theory to predict a particular result is not required. In addition, it should be understood that the methods and structures described herein may improve the Sagnac interferometers in other ways or may be employed for other reasons altogether.

**Claims**

1.   An optical sensor comprising:

a light source (16) having an output that emits a first optical signal;
a directional coupler (34) comprising at least a first port (A), a second port (B) and a third port (D), the first port optically coupled to the light source to receive the first optical signal emitted from the light source, the first port optically coupled to the second port and to the third port such that the first optical signal received by the first port is split into a second optical signal (W1) output by the second port and a third optical signal (W2) output by the third port;
a hollow-core photonic-bandgap fiber (13) having a hollow core surrounded by a cladding, the hollow-core photonio-bandgap fiber optically coupled to the second port and to the third port such that the second optical signal and the third optical-signal counterpropagate through the hollow-core photonic-bandgap fiber and return to the third port and the second optical port, respectively, the cladding of the hollow-core photonic-bandgap fiber substantially confining the counterpropagating second optical signal and third optical signal within the hollow core; and

an optical detector (30) located at a position in the optical sensor to receive the counterpropagating second ana third optical signals after the second and third optical signals have traversed the hollow-core photonic-bandgap fiber.

2. The optical sensor of Claim 1, wherein the light source comprises a broadband source outputting light having a spectral distribution with a full width at half maximum of about 1 nanometer or larger.

3. The optical sensor of Claim 2, wherein the light source comprises a superfluorescent light source.

4. The optical sensor of Claim 3, wherein the light source mean wavelength is stable to at least about $\pm 100$ parts per million.

5. The optical sensor of Claim 3, wherein the light source mean wavelength is stable to at least about $\pm 10$ parts per million.

6. The optical sensor of Claim 3, wherein the light source mean wavelength is stable to at least about $\pm 1$ part per million.

7. The optical sensor of Claim 3, wherein the light source mean wavelength is stable to at least about $\pm 0.1$ part per million.

8. The optical sensor of Claim 3, wherein the superfluorescent light source comprises a superluminescent fiber source.

9. The optical sensor of Claim 3, wherein the superfluorescent light source comprises a light-emitting diode.

10. The optical sensor of Claim 2, wherein the light source comprises a broadband fiber laser.

11. The optical sensor of Claim 1, wherein the light source comprises a broadband source outputting light having a spectral distribution with a full width at half maximum of between about I nanometer and about 10 nanometers.

12. The optical sensor of Claim 1, further comprising an amplitude modulator that modulates the amplitude of the first optical signal output from the light source.

13. The optical sensor of Claim 12, wherein the amplitude modulator is external to the light source.

14. The optical sensor of Claim 1, further comprising a frequency modulator that modulates the frequency of the first optical signal output from the light source.

15. The optical sensor of Claim 12, wherein the frequency modulator is external to the light source.

16. The optical sensor of Claim 1, wherein the light source comprises a narrowband source that outputs light having a spectral distribution with a full width at half maximum of less than 1 nanometer.

17. The optical sensor of Claim 16, wherein the narrowband light source comprises a fiber laser

18. The optical sensor of Claim 16, wherein the narrowband light source comprises a semiconductor laser diode.

19. The optical sensor of Claim 16, wherein the light source mean wavelength is stable to at least about $\pm 100$ parts per milion.

20. The optical sensor of Claim 16, wherein the light source mean wavelength is stable to at least about $\pm 10$ parts per million.

21. The optical sensor of Claim 16, wherein the light source mean wavelength is stable to at least about $\pm 1$ part per million.

22. The optical sensor of Claim 16, wherein the light source mean wavelength is stable to at least about $\pm 0.1$ part per million.

23. The optical sensor of Claim 1, wherein the hollow-core photonic-bandgap fiber comprises polarization-maintaining photonic-bandgap fiber.

24. The optical sensor of Claim 1, wherein photonic-bandgap fiber comprises a plurality of features arranged in a periodic array across a cross-section of the hollow-core photonic-bandgap fiber that surrounds the hollow core.

25. The optical sensor of Claim 1, wherein photonic-bandgap fiber comprises a Bragg fiber.

26. The optical sensor of Claim 1, wherein the hollow-core photonic-bandgap fiber cladding comprises a silica-based glass.

27. The optical sensor of Claim 26, wherein the cladding further comprises a periodic array of channels in the silica-based glass.

28. The optical sensor of Claim 27, wherein the channels are hollow.

29. The optical sensor of claim 1, wherein the first optical signal has a mean wavelength, $\lambda$, stable to within at least about $\pm 10^{-6}$.

30. A method for sensing comprising:

producing light having a mean wavelength, $\lambda$, the light being divided into two portions;
propagating a first portion of the light (W1) clockwise around a hollow waveguide (13), and propagating a second portion of the light (W2) counterclockwise around the hollow waveguide;
substantially confining the first and second portions of light to propagation through a hollow core in the hollow waveguide by a cladding having a photonic-bandgap structure for the light
optically interfering the first and second portions of light after propagating the first and second portions of light around the hollow waveguide in the respective clockwise and counterclockwise directions, thereby producing an optical interference signal;
subjecting the hollow waveguide to a perturbation; and
measuring variations in the optical interference signal caused by the perturbation

31. The method of Claim 30, wherein the first and second portions of light are substantially confined to the hollow core, thereby reducing backscattering.

32. The method of Claim 31, wherein at least about 90% of the light is confined to the hollow core.

33. The method of Claim 31, wherein at least about 95% of the light is confined to the hollow core.

34. The method of Claim 31, wherein at least about 99% of the light is confined to the hollow core.

35. The method of Claim 30, wherein the first and second portions of light are substantially confined to a region in the hollow core comprising air.

36. The method of Claim 30, wherein the first and second portions of light are substantially confined to a region in the hollow core comprising vacuum.

37. The method of Claim 30, further comprising intensity modulating the light.

38. The method of Claim 30, further comprising intensity modulating the light at a duty cycle between 49% and 51%.

39. The method of Claim 30, further comprising intensity modulating the light at a duty cycle of about 50%.

40. The method of Claim 30, further comprising phase modulating the first and second portions of light propagating clockwise and counterclockwise through the optical path.

41. The method of Claim 30, further comprising frequency modulating the light with a modulation signal having a modulation frequency between about 1 Gigahertz and about 50 Gigahertz.

**42.** The method of Claim 30, further comprising frequency modulating the light with a modulation signal having a frequency of about 10 Gigahertz.

**43.** The method of Claim 30, wherein the perturbation comprises rotation.

**44.** The method of Claim 30, wherein the perturbation comprises pressure.

**45.** The method of Claim 30, wherein the perturbation comprises motion.

**46.** The method of Claim 30, wherein the light has a substantially invariant mean wavelength, $\lambda$, which varies no more than about $\pm 10^6$.


**Patentansprüche**

**1.** Optischer Sensor, welcher umfaßt:

eine Lichtquelle (16) mit einem Ausgang, der ein erstes optisches Signal ausgibt,
einen Richtungskoppler (34), der wenigstens einen ersten Anschluß (A), einen zweiten Anschluß (B) und einen dritten Anschluß (D) aufweist, wobei der erste Anschluß optisch mit der Lichtquelle gekoppelt ist, um das von der Lichtquelle ausgegebene erste optische Signal zu empfangen, und der erste Anschluß optisch mit dem zweiten Anschluß und dem dritten Anschluß gekoppelt ist, so daß das erste optische Signal, das von dem ersten Anschluß empfangen wird, in ein zweites optisches Signal ($W_1$), welches von dem zweiten Anschluß ausgegeben wird, und ein drittes optisches Signal ($W_2$), welches von dem dritten Anschluß ausgegeben wird, aufgeteilt wird,
eine photonische Bandlückenfaser (13) mit Hohlkern, die einen hohlen Kern hat, der von einem Mantel umgeben ist, wobei die photonische Bandlückenfaser mit Hohlkern optisch mit dem zweiten Anschluß und dem dritten Anschluß gekoppelt ist, so daß das zweite optische Signal und das dritte optische Signal sich entgegengesetzt durch die photonische Bandlückenfaser mit HohlKern ausbreiten und zu dem dritten Anschluß bzw. dem zweiten optischen Anschluß zurückkehren, wobei der Mantel der photonischen Bandlückenfaser mit Hohlkern das zweite optische Signal und dritte optische Signal, die sich entgegengesetzt ausbreiten, im wesentlichen auf den Hohlkern begrenzt, und
einen optischen Detektor (30), der an einer solchen Position in dem optischen Sensor liegt, daß er die sich entgegengesetzt ausbreitenden zweiten und dritten optischen Signale empfängt, nachdem die zweiten und dritten optischen Signale die photonische Bandlückenfaser mit Hohlkern durchquert haben.

**2.** Optischer Sensor nach Anspruch 1, wobei die Lichtquelle eine Breitbandquelle umfaßt, die Licht mit einer spektralen Verteilung mit einer Halbwertsbreite von etwa 1 Nanometer oder mehr ausgibt.

**3.** Optischer Sensor nach Anspruch 2, wobei die Lichtquelle eine Superfluoreszenz-Lichtquelle aufweist.

**4.** Optischer Sensor nach Anspruch 3, wobei die mittlere Wellenlänge der Lichtquelle bis auf wenigstens etwa $\pm 100$ Teile pro Million stabil ist.

**5.** Optischer Sensor nach Anspruch 3, wobei die mittlere Wellenlänge der Lichtquelle bis auf wenigstens etwa $\pm 10$ Teile pro Million stabil ist.

**6.** Optischer Sensor nach Anspruch 3, wobei die mittlere Wellenlänge der Lichtquelle bis auf wenigstens etwa $\pm 1$ Teil pro Million stabil ist.

**7.** Optischer Sensor nach Anspruch 3, wobei die mittlere Wellenlänge der Lichtquelle bis auf wenigstens etwa $\pm 0.1$ Teil pro Million stabil ist.

**8.** Optischer Sensor nach Anspruch 3, wobei die Superfluoreszenz-Lichtquelle eine Superlumineszenz-Faserquelle aufweist.

**9.** Optischer Sensor nach Anspruch 3, wobei die Superfluoreszenz-Lichtquelle eine Leuchtdiode aufweist.

**10.** Optischer Sensor nach Anspruch 2, wobei die Lichtquelle einen Breitband-Faserlaser aufweist.

**11.** Optischer Sensor nach Anspruch 1, wobei die Lichtquelle eine Breitbandquelle aufweist, die Licht mit einer spektralen Verteilung mit einer Halbwertsbreite von zwischen etwa 1 Nanometer und etwa 10 Nanometern ausgibt.

**12.** Optischer Sensor nach Anspruch 1, welcher weiterhin einen Amplitudenmodulator aufweist, der die Amplitude des von der Lichtquelle ausgegebenen ersten optischen Signals moduliert.

**13.** Optischer Sensor nach Anspruch 12, wobei der Amplitudenmodulator außerhalb der Lichtquelle liegt.

**14.** Optischer Sensor nach Anspruch 1, welcher weiterhin einen Frequenzmodulator aufweist, der die Frequenz des von der Lichtquelle ausgegebenen ersten optischen Signals moduliert.

**15.** Optischer Sensor nach Anspruch 12, wobei der Frequenzmodulator außerhalb der Lichtquelle liegt.

**16.** Optischer Sensor nach Anspruch 1, wobei die Lichtquelle eine Schmalbandquelle aufweist, die Licht mit einer spektralen Verteilung mit einer Halbwertsbreite von weniger als 1 Nanometer ausgibt.

**17.** Optischer Sensor nach Anspruch 16, wobei die Schmalband-Lichtquelle einen Faserlaser aufweist.

**18.** Optischer Sensor nach Anspruch 16, wobei die Schmalband-Lichtquelle eine Halbleiterlaserdiode aufweist.

**19.** Optischer Sensor nach Anspruch 16, wobei die mittlere Wellenlänge der Lichtquelle bis auf wenigstens etwa $\pm$ 100 Teile pro Million stabil ist.

**20.** Optischer Sensor nach Anspruch 16, wobei die mittlere Wellenlänge der Lichtquelle bis auf wenigstens etwa $\pm$ 10 Teile pro Million stabil ist.

**21.** Optischer Sensor nach Anspruch 16, wobei die mittlere Wellenlänge der Lichtquelle bis auf wenigstens etwa $\pm$ 1 Teil pro Million stabil ist.

**22.** Optischer Sensor nach Anspruch 16, wobei die mittlere Wellenlänge der Lichtquelle bis auf wenigstens etwa $\pm$ 0.1 Teil pro Million stabil ist.

**23.** Optischer Sensor nach Anspruch 1, wobei die photonische Bandlückenfaser mit Hohlkern eine polarisationserhaltende photonische Bandlückenfaser aufweist.

**24.** Optischer Sensor nach Anspruch 1, wobei die photonische Bandlückenfaser eine Mehrzahl von Merkmalen aufweist, die in einem periodischen Array über einen Querschnitt der photonischen Bandlückenfaser mit Hohlkern hinweg angeordnet sind, welches den Hohlkern umgibt.

**25.** Optischer Sensor nach Anspruch 1, wobei die photonische Bandlückenfaser eine Bragg-Faser aufweist.

**26.** Optischer Sensor nach Anspruch 1, wobei der Mantel der photonischen Bandlückenfaser mit Hohlkern ein auf Siliciumdioxid basierendes Glas umfaßt.

**27.** Optischer Sensor nach Anspruch 26, wobei der Mantel weiterhin ein periodisches Array von Kanälen in dem auf Siliciumdioxid basierenden Glas umfaßt.

**28.** Optischer Sensor nach Anspruch 27, wobei die Kanäle hohl sind.

**29.** Optischer Sensor nach Anspruch 1, wobei das erste optische Signal eine mittlere Wellenlänge $\lambda$ hat, die bis auf mindestens etwa $\pm$ $10^{-6}$ stabil ist.

**30.** Verfahren zum Abtasten, welches umfaßt:

Erzeugen von Licht mit einer mittleren Wellenlänge $\lambda$, wobei das Licht in zwei Teile aufgeteilt ist,
Propagieren eines ersten Teils des Lichts ($W_1$) im Uhrzeigersinn in einem hohlen Wellenleiter (13) und Propagieren eines zweiten Teils des Lichts ($W_2$) im Gegenuhrzeigersinn in dem hohlen Wellenleiter,
im wesentlichen Begrenzen der ersten und zweiten Teile des Lichts mittels eines Mantels, der eine photonische Bandlückenstruktur für das Licht aufweist, derart, daß sie durch einen Hohlkern in dem hohlen Wellenleiter propagieren,
nach dem Propagieren der ersten und zweiten Teile des Lichts im Uhrzeigersinn bzw. im Gegenuhrzeigersinn in dem hohlen Wellenleiter optisches Interferieren der ersten und zweiten Teile des Lichts, wodurch ein optisches Interferenzsignal erzeugt wird.
Aussetzen des hohlen Wellenleiters gegenüber einem Störeinfluß und
Messen von Änderungen in dem optischen Interferenzsignal, die durch den Störeinfluß verursacht werden.

31. Verfahren nach Anspruch 30, wobei die ersten und zweiten Teile des Lichts im wesentlichen auf den Hohlkern begrenzt sind, wodurch die Rückstreuung reduziert wird.

32. Verfahren nach Anspruch 31, wobei wenigstens etwa 90% des Lichts auf den Hohlkern begrenzt sind.

33. Verfahren nach Anspruch 31, wobei wenigstens etwa 95% des Lichts auf den Hohlkern begrenzt sind.

34. Verfahren nach Anspruch 31, wobei wenigstens etwa 99% des Lichts auf den Hohlkern begrenzt sind.

35. Verfahren nach Anspruch 30, wobei die ersten und zweiten Teile des Lichts im wesentlichen auf einen Bereich in dem Hohlkern begrenzt sind, der Luft enthält.

36. Verfahren nach Anspruch 30, wobei die ersten und zweiten Teile des Lichts im wesentlichen auf einen Bereich in dem Hohlkern begrenzt sind, der ein Vakuum enthält.

37. Verfahren nach Anspruch 30, welches weiterhin ein Modulieren der Intensität des Lichts umfaßt.

38. Verfahren nach Anspruch 30, welches weiterhin ein Modulieren der Intensität des Lichts bei einem Tastverhältnis zwischen 49% und 51% umfaßt.

39. Verfahren nach Anspruch 30, welches weiterhin ein Modulieren der Intensität des Lichts bei einem Tastverhältnis von etwa 50% umfaßt.

40. Verfahren nach Anspruch 30, welches weiterhin ein Phasenmodulieren der ersten und zweiten Teile des Lichts, die im Uhrzeigersinn und im Gegenuhrzeigersinn durch den optischen Pfad propagieren, umfaßt.

41. Verfahren nach Anspruch 30, welches weiterhin ein Modulieren der Frequenz des Lichts mit einem Modulationssignal mit einer Modulationsfrequenz zwischen etwa 1 Gigahertz und etwa 50 Gigahertz umfaßt.

42. Verfahren nach Anspruch 30, welches weiterhin ein Modulieren der Frequenz des Lichts mit einem Modulationssignal mit einer Frequenz von etwa 10 Gigahertz umfaßt.

43. Verfahren nach Anspruch 30, wobei der Störeinfluß Rotation umfaßt.

44. Verfahren nach Anspruch 30, wobei der Störeinfluß Druck umfaßt.

45. Verfahren nach Anspruch 30, wobei der Störeinfluß Bewegung umfaßt.

46. Verfahren nach Anspruch 30, wobei das Licht eine im wesentlichen gleichbleibende mittlere Wellenlänge $\lambda$ hat, die um nicht mehr als etwa $\pm\ 10^6$ variiert.


**Revendications**

1. Capteur optique comportant :

   une source de lumière (16) ayant une sortie qui émet un premier signal optique ;
   un coupleur directionnel (34) comportant au moins un premier accès (A), un deuxième accès (B) et un troisième accès (D), le premier accès étant couplé optiquement à la source de lumière afin de recevoir le premier signal optique émis depuis la source de lumière, le premier accès étant couplé optiquement au deuxième accès et au troisième accès de façon que le premier signal optique reçu par le premier accès soit divisé en un deuxième signal optique ($W_1$) délivré en sortie par le deuxième accès et en un troisième signal optique ($W_2$) délivré en sortie par le deuxième accès ;

ne fibre (13) à coeur creux à bande interdite photonique, ayant un coeur creux entouré d'une gaine, la fibre à coeur creux à bande interdite photonique, étant couplée optiquement au deuxième accès et au troisième accès de façon que le deuxième signal optique et le troisième signal optique se propagent en sens contraire dans la fibre à coeur creux à bande interdite photonique, et reviennent au troisième accès et au deuxième accès optique, respectivement, la gaine de la fibre à coeur creux à bande interdite photonique confinant sensiblement le deuxième signal optique et le troisième signal optique se propageant en sens contraire à l'intérieur du coeur creux ; et

un détecteur optique (30) placé dans une position dans le capteur optique pour recevoir les deuxième et troisième signaux optiques se propageant en sens contraire après que les deuxième et troisième signaux optiques ont parcouru la fibre à coeur creux à bande interdite photonique.

2. Capteur optique selon la revendication 1, dans lequel la source de lumière comprend une source à large bande délivrant en sortie une lumière ayant une distribution spectrale d'une pleine largeur à la moitié du maximum d'environ 1 nanomètre ou plus.

3. Capteur optique selon la revendication 2, dans lequel la source de lumière comprend une source de lumière superfluorescente.

4. Capteur optique selon la revendication 3, dans lequel la longueur d'onde moyenne de la source de lumière est stable à au moins environ $\pm$ 100 parties par million.

5. Capteur optique selon la revendication 3, dans lequel la longueur d'onde moyenne de la source de lumière est stable à au moins environ $\pm$ 10 parties par million.

6. Capteur optique selon la revendication 3, dans lequel la longueur d'onde moyenne de la source de lumière est stable à au moins environ $\pm$ 1 partie par million.

7. Capteur optique selon la revendication 3, dans lequel la longueur d'onde moyenne de la source de lumière est stable à au moins environ $\pm$ 0,1 partie par million.

8. Capteur optique selon la revendication 3, dans lequel la source de lumière superfluorescente comprend une source à fibre superluminescente.

9. Capteur optique selon la revendication 3, dans lequel la source de lumière superfluorescente comprend une diode émettrice de lumière.

10. Capteur optique selon la revendication 2, dans lequel la source de lumière comprend un laser à fibre à large bande.

11. Capteur optique selon la revendication 1, dans lequel la source de lumière comprend une source à large bande délivrant en sortie une lumière ayant une distribution spectrale d'une pleine largeur à la moitié du maximum comprise entre environ 1 nanomètre et environ 10 nanomètres.

12. Capteur optique selon la revendication 1, comportant en outre un modulateur d'amplitude qui module l'amplitude du premier signal optique délivrée en sortie de la source de lumière.

13. Capteur optique selon la revendication 12, dans lequel le modulateur d'amplitude est extérieur à la source de lumière.

14. Capteur optique selon la revendication 1, comportant en outre un modulateur de fréquence qui module la fréquence du premier signal optique délivrée en sortie de la source de lumière.

15. Capteur optique selon la revendication 12, dans lequel le modulateur de fréquence est extérieur à la source de lumière.

**16.** Capteur optique selon la revendication 1, dans lequel la source de lumière comporte une source à bande étroite qui délivre en sortie une lumière ayant une distribution spectrale présentant une pleine largeur à demi maximum inférieure à 1 nanomètre.

**17.** Capteur optique selon la revendication 16, dans lequel la source de lumière à bande étroite comprend un laser à fibre.

**18.** Capteur optique selon la revendication 16, dans lequel la source de lumière à bande étroite comprend une diode laser à semiconducteur.

**19.** Capteur optique selon la revendication 16, dans lequel la longueur d'onde moyenne de la source de lumière est stable à au moins environ $\pm$ 100 parties par million.

**20.** Capteur optique selon la revendication 16, dans lequel la longueur d'onde moyenne de la source de lumière est stable à au moins environ $\pm$ 10 parties par million.

**21.** Capteur optique selon la revendication 16, dans lequel la longueur d'onde moyenne de la source de lumière est stable à au moins environ $\pm$ 1 partie par million.

**22.** Capteur optique selon la revendication 16, dans lequel la longueur d'onde moyenne de la source de lumière est stable à au moins environ $\pm$ 0,1 partie par million.

**23.** Capteur optique selon la revendication 11, dans lequel la fibre à coeur creux à bande interdite photonique, comprend une fibre à bande interdite photonique maintenant la polarisation.

**24.** Capteur optique selon la revendication 1, dans lequel la fibre à bande interdite photonique comporte plusieurs configurations agencées en un réseau périodique sur une section transversale de la fibre à coeur creux à bande interdite photonique, qui entoure le coeur creux.

**25.** Capteur optique selon la revendication 1, dans lequel la fibre à bande interdite photonique comprend une fibre de Bragg.

**26.** Capteur optique selon la revendication 1, dans lequel la gaine de la fibre à coeur creux à bande interdite photonique, comprend du verre à base de silice.

**27.** Capteur optique selon la revendication 26, dans lequel la gaine comprend en outre un réseau périodique de canaux dans le verre à base de silice.

**28.** Capteur optique selon la revendication 27, dans lequel les canaux sont creux.

**29.** Capteur optique selon la revendication 1, dans lequel le premier signal optique a une longueur d'onde moyenne, λ, stable en-deçà d'au moins environ $\pm$ $10^{-6}$.

**30.** Procédé pour capteur, comprenant :

la production d'une lumière ayant une longueur d'onde moyenne, λ, la lumière étant divisée en deux parties ;
la propagation d'une première partie de la lumière ($W_1$) dans le sens des aiguilles d'une montre le long d'un guide d'onde creux (13), et la propagation d'une seconde partie de la lumière ($W_2$) dans le sens inverse de celui des aiguilles d'une montre du guide d'onde creux ;
le confinement substantiel des première et seconde parties de lumière à une propagation dans un coeur creux du guide d'onde creux par une gaine ayant une structure à bande interdite photonique pour la lumière ;
la mise en interférence optique des première et seconde parties de la lumière après la propagation des première et seconde parties de la lumière le long du guide d'onde creux dans les sens respectifs des aiguilles d'une montre et contraire, produisant ainsi un signal d'interférence optique ;
la soumission du guide d'onde creux à une perturbation ; et
la mesure des variations dans le signal d'interférence optique provoquées par la perturbation.

**31.** Procédé selon la revendication 30, dans lequel les première et seconde parties de lumière sont confinées sensiblement au coeur creux, réduisant ainsi la rétrodiffusion.

**32.** Procédé selon la revendication 31, dans lequel au moins environ 90 % de la lumière sont confinés au coeur creux.

**33.** Procédé selon la revendication 31, dans lequel au moins environ 95 % de la lumière sont confinés au coeur creux.

**34.** Procédé selon la revendication 31, dans lequel au moins environ 99 % de la lumière sont confinés au coeur creux.

**35.** Procédé selon la revendication 30, dans lequel les première et seconde parties de lumière sont sensiblement confinées à une région dans le coeur creux comprenant de l'air.

**36.** Procédé selon la revendication 30, dans lequel les première et seconde parties de lumière sont confinées sensiblement dans une région dans le coeur creux comprenant du vide.

**37.** Procédé selon la revendication 30, comprenant en outre une modulation de l'intensité de la lumière.

**38.** Procédé selon la revendication 30, comprenant en outre une modulation de l'intensité de la lumière à un facteur d'utilisation compris entre 49 % et 51 %.

**39.** Procédé selon la revendication 30, comprenant en outre une modulation de l'intensité de la lumière à un facteur d'utilisation d'environ 50 %.

**40.** Procédé selon la revendication 30, comprenant en outre une modulation de phase des première et seconde parties de la lumière se propageant dans le sens des aiguilles d'une montre et en sens contraire dans le chemin optique.

**41.** Procédé selon la revendication 30, comprenant en outre une modulation de fréquence de la lumière avec un signal de modulation ayant une fréquence de modulation comprise entre environ 1 Gigahertz et environ 50 Gigahertz.

**42.** Procédé selon la revendication 30, comprenant en outre une modulation de fréquence de la lumière avec un signal de modulation ayant une fréquence d'environ 10 Gigahertz.

**43.** Procédé selon la revendication 30, dans lequel la perturbation comprend une rotation.

**44.** Procédé selon la revendication 30, dans lequel la perturbation comprend une pression.

**45.** Procédé selon la revendication 30, dans lequel la perturbation comprend un mouvement.

**46.** Procédé selon la revendication 30, dans lequel la lumière a une longueur d'onde moyenne sensiblement invariable, $\lambda$, qui ne varie pas de plus d'environ $\pm 10^6$.

FIG. 1

EP 1 391 693 B1

*13*

*112*

*118*

*114*

*116*

*114*

*116*

# FIG. 2A

*13*

*116*

*112*

*118*

*114*

# FIG. 2B

FIG. 3

EP 1 391 693 B1

FIG. 4

FIG. 5

EP 1 391 693 B1

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5331404 A
- WO 9964903 A
- NO 4773759, Bereb
- US 4389090 A, Lefévre
- US 4536058 A, Shaw
- EP 0038023 A

- US 4773759 A
- US 5802236 A, DiGiovanni
- US 6243522 B, Allen
- US 6260388 B, Borrelli
- US 6334017 B, West
- US 6334019 B, Birks

**Non-patent literature cited in the description**

- **HERVÉ LEFÈVRE.** *The Fiber-Optic Gyroscope,* 1993
- **HERVÉ LEFÈVRE.** *The Fiber Optic Gyroscope,* 101-106
- **H.C. LEFÉVRE.** Single-Mode Fibre Fractional Wave Devices and Polarisation Controllers. *Electronics Letters,* 25 September 1980, vol. 16, 778-780
- **J. M, MACKINTOSH et al.** Analysis and observation of coupling ratio dependence of Rayletgh backscattering noise in a fiber optic gyroscope. *Journal of Lightwave Technology,* 09 September 1989, vol. 7, 1323-1328
- **HERVÉ LEFÈVRE.** The Fiber-Optic Gyroscope
- **J.M. MACKINTOSH et al.** *Analysis and observation of coupling ratio dependence of Rayleigh backscattering noise in a fiber optic gyroscope,*
- **B.Y. KIM.** Signal Processing Techniques. *Optical Fiber Rotation Sensing,* 1994, 81-114
- **N. VENKATARAMAN et al.** Low Loss (13 dB/km) Air Core Photonic Band-Gap Fibre,. *Proceedings of the European Conference on Optical Communication. ECOC 2002,* 01 September 2002
- **P. YEH et al.** Theory of Bragg Fiber,. *Journal of Optical Society of America,* 1978, vol. 68, 1197-1201

- **D.G. OUZOUNOV et al.** Dispersion and nonlinear propagation in air-core photonic-bandgap fibers,. *Proceedings of the Conf. on Lasers and Electro-optics,* 05 June 2003
- **R.A. BERGH et al.** Compensation of the Optical Kerr Effect in Fiber-Optic Gyroscopes,. *Optics Letters.,* 1992, vol. 7, 282-284
- **HERVÉ LEFÈVRE.** *The Fiber-Optic Gyroscope,*
- **K. LIU et al.** Broadband Diode-Pumped Fiber Laser. *Electron. Letters.,* 14 July 1988, vol. 24, 838-840
- Rare Earth Doped Fiber Lasers and Amplifiers,. Marcel Dekker, Inc, 2001
- **M. SZUSTAKOWSKI et al.** Recent development of fiber optic sensors for perimeter security,. *Proceedings of the 35th Annual 2001 International Carnahan Conference on Security Technology.,* 16 October 2001, 142-148
- **G.S. KINO et al.** A Polarization-based Folded Sagnac Fiber-optic Array for Acoustic Waves. *SPIE Proceedings on Fiber Optic Sensor Technology and Applications 2001,* 2002, vol. 4578, 336-345